# EUROPEAN PATENT APPLICATION

(11) **EP 4 418 476 A1**
(43) Date of publication of application: **21.08.2024**
(21) Application number: 23157326.2
(22) Date of filing: 17.02.2023
(51) Int. Cl.: H02G 3/16, H02G 5/08

(54) **POWER CABINET FOR A CHARGING STATION AND CHARGING STATION FOR ELECTRIC VEHICLES**

(71) Applicant: ABB E-mobility B.V., 2629 JG Delft (NL)
(72) Inventor: MACIOCHA, Dariusz, 30-394 Kraków (PL); UGUR, Ali, 2545 XP Den Haag (NL)
(74) Representative: Zimmermann & Partner Patentanwälte mbB

(57) **Abstract**

A power cabinet (10) for a charging station (20) is described. The power cabinet (10) includes a first busbar (11) having a first connector plate (111) for connecting at least one first incoming power line (13), and a second connector plate (112) for connecting at least one first outgoing power line (14). The second connector plate (112) is inclined with respect to the first connector plate (111) by a first angle α₁ of 80° ≤ α₁ ≤ 110°. Further, the power cabinet (10) includes a second busbar (12) having a third connector plate (123) for connecting at least one second incoming power line (15) and a fourth connector plate (124) for connecting at least one second outgoing power line (16). The third connector plate (123) is arranged opposite the first connector plate (111). The fourth connector plate (124) is inclined with respect to the third connector plate (123) by a second angle α₂ of 80° ≤ α₂ ≤ 100°. The fourth connector plate (124) is arranged opposite the second connector plate (112).

## Description

### TECHNICAL FIELD

Embodiments of the present disclosure relate to charging stations for electric vehicles. In particular, embodiments of the present disclosure relate power cabinets for electric vehicle charging stations.

### BACKGROUND

Electric and hybrid-electric vehicles are an alternative mode of transport to petrol and diesel engine vehicles. These vehicles use an electric motor as a main or an auxiliary driving mechanism, and incorporate a rechargeable battery to power the electric motor. Recent advancements in electric vehicle technology have led to electric vehicles with increased range and speed, which has contributed to an increase in the popularity of electric vehicle ownership. As an increased number of vehicle manufacturers begin to produce electric vehicles, electric vehicle ownership appears set to become commonplace.

Electric vehicles are generally recharged by connecting the electric vehicle to a specialized charging apparatus (which may be referred to as a charging station or a charging point), which includes a charging connector which couples with a charging port on the vehicle and delivers power to recharge the vehicle's battery. The charging stations generally draw electricity from the main power grid, and are therefore provided in locations electrically connected to the main power grid. For example, electric vehicle charging stations may be provided at service stations, shopping or leisure venues, or may be provided at the user's home. Electric vehicle recharging is currently much slower than refilling a petrol or diesel vehicle with fuel, and may require a user to recharge their electric vehicle for a long time, for example overnight.

The advancement of electric vehicles has created an increased need for charging equipment that delivers electric power. In particular, compactness, efficiency and simplicity of power cabinets for charging stations is of high interest. Accordingly, there is a demand for improved power cabinet for charging stations for electric vehicles which at least partially overcome some of the problems of the state of the art.

### SUMMARY

In light of the above, a power cabinet for a charging station and a charging station according to the independent claims are provided. Further aspects, advantages, and features are apparent from the dependent claims, the description, and the accompanying drawings.

According to an aspect of the present disclosure, a power cabinet for a charging station is provided. The power cabinet includes a first busbar having a first connector plate for connecting at least one first incoming power line. Additionally, the power cabinet includes a second connector plate for connecting at least one first outgoing power line. The second connector plate is inclined with respect to the first connector plate by a first angle α₁ of 80° ≤ α₁ ≤ 110°. Further, the power cabinet includes a second busbar having a third connector plate for connecting at least one second incoming power line. The third connector plate is arranged opposite the first connector plate. Further, the second busbar has a fourth connector plate for connecting at least one second outgoing power line. The fourth connector plate is inclined with respect to the third connector plate by a second angle α₂ of 80° ≤ α₂ ≤ 100°. The fourth connector plate is arranged opposite the second connector plate.

Accordingly, beneficially a power cabinet for a charging station is provided which is improved compared to the state of the art. In particular, a power cabinet having a configuration according to embodiments described herein, beneficially provides for the possibility to connect the charging cable with the busbars such that a bending radius of the charging cable within the power cabinet is reduced as compared to the state of the art. A reduction of the bending radius of the charging cable is particularly beneficial for liquid cooled charging cables. Further, the configuration of the power cabinet according to embodiments described herein has the advantage that a compact arrangement of busbars for connecting incoming and outgoing powerlines is provided, such that the overall size of the power cabinet can be decreased. Further, the configuration of the power cabinet according to embodiments described herein, provides for the possibility that the incoming power lines can be provided from a bottom into the power cabinet and the outgoing power lines of the charging cable can exit the power cabinet through a side wall of the power cabinet. Moreover, the configuration of the power cabinet according to the present disclosure beneficially provides for the possibility of frontal access for connecting the incoming and outgoing power lines to the busbars. Accordingly, access to the busbars, particularly the busbar terminals, for connecting or disconnecting the power lines, e.g. during installation, service or maintenance, is facilitated.

According to another aspect of the present disclosure, a charging station for an electric vehicle is provided. The charging station includes a power cabinet. The power cabinet includes a first busbar having a first connector plate for connecting at least one first incoming power line. Additionally, the power cabinet includes a second connector plate for connecting at least one first outgoing power line. The second connector plate is inclined with respect to the first connector plate by a first angle α₁ of 80° ≤ α₁ ≤ 110°. Further, the power cabinet includes a second busbar having a third connector plate for connecting at least one second incoming power line. The third connector plate is arranged opposite the first connector plate. Further, the second busbar has a fourth connector plate for connecting at least one second outgoing power line. The fourth connector plate is inclined with respect to the third connector plate by a second angle α₂ of 80° ≤ α₂ ≤ 100°. The fourth connector plate is arranged opposite the second connector plate. In particular, the power cabinet is a power cabinet according to any of the embodiments described herein. Further, the charging station includes a charging cable including the at least one first outgoing power line connected to the second connector plate. Additionally, the charging cable includes at least one second outgoing power line connected to the fourth connector plate.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
Fig. 1 shows a schematic view of a power cabinet for a charging station according to embodiments of the present disclosure; and
Fig. 2 shows a sectional view along line A-A indicated in Fig. 1.

### DETAILED DESCRIPTION OF EMBODIMENTS

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

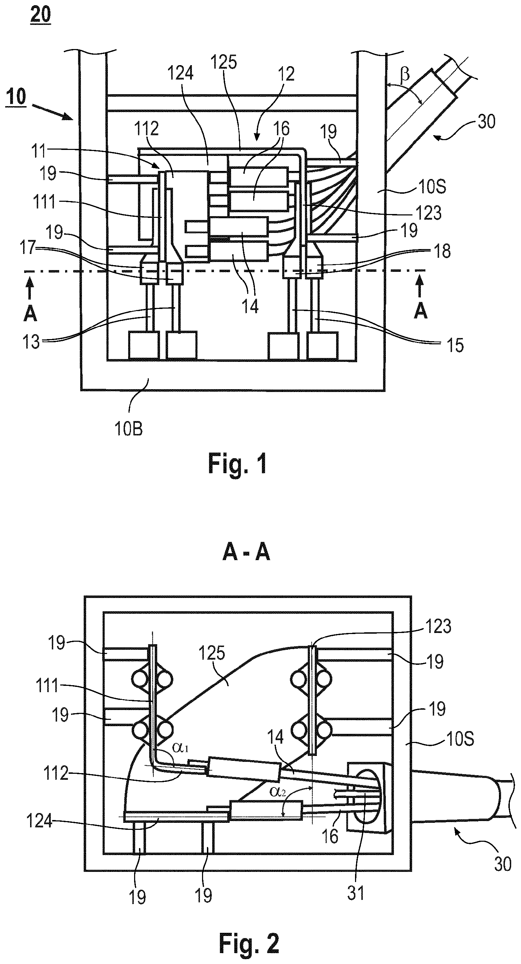

With exemplary reference to Figures 1 and 2, a power cabinet 10 for a charging station 20 and charging station 20 for an electric vehicle according to embodiments of the present disclosure are described.

According to embodiments, which can be combined with other embodiments described herein, the power cabinet 10 includes a first busbar 11 having a first connector plate 111 for connecting at least one first incoming power line 13. Additionally, the first busbar 11 includes a second connector plate 112 for connecting at least one first outgoing power line 14. The second connector plate 112 is inclined with respect to the first connector plate 111 by a first angle α₁ of 80° ≤ α₁ ≤ 110°. Additionally, the power cabinet 10 includes a second busbar 12 having a third connector plate 123 for connecting at least one second incoming power line 15. The third connector plate 123 is arranged opposite the first connector plate 111. Further, the second busbar 12 has a fourth connector plate 124 for connecting at least one second outgoing power line 16. The fourth connector plate 124 is inclined with respect to the third connector plate 123 by a second angle α₂ of 80° ≤ α₂ ≤ 100°. The fourth connector plate 124 is arranged opposite the second connector plate 112.

Accordingly, compared to the state of the art, an improved busbar interface for connecting incoming and outgoing powerlines in a power cabinet, particularly of a charging station for electric vehicles, is provided such that compactness of the power cabinet can be improved and a bending radius of the charging cable within the power cabinet can be reduced. Further, it is to be noted that the configuration of the power cabinet, particularly the first busbar and the second busbar, provide for the possibility that the incoming power lines can be provided from a bottom into the power cabinet and the outgoing power lines of a charging cable can exit the power cabinet through a side wall of the power cabinet. Moreover, the configuration of the power cabinet beneficially provides for an easier frontal access for connecting the incoming and outgoing power lines to the busbars, as compared to the state of the art.

With exemplary reference to Fig. 1, according to embodiments, which can be combined with other embodiments described herein, the at least one first incoming power line 13 is provided into the power cabinet 10 from a bottom 10B of the power cabinet 10. Additionally or alternatively, the at least one second incoming power line 15 is provided into the power cabinet 10 from the bottom 10B of the power cabinet 10. Typically, the least one first incoming power line 13 and the at least one second incoming power line 15 are configured for direct current. Although not explicitly shown, it is to be understood, that the at least one first incoming power line 13 and the at least one second incoming power line 15 can be connected to power supply for providing the power. Further, it is to be understood that the at least one first incoming power line 13 can include two, three, four or more first incoming power lines. Accordingly, the second incoming power line 15 can include two, three, four or more second incoming power lines.

According to embodiments, which can be combined with other embodiments described herein, the at least one first outgoing power line 14 and the at least one second outgoing power line 16 exit the power cabinet 10 at a side wall 10S of the power cabinet 10, as exemplarily shown in Figs. 1 and 2. It is to be understood that at least one first outgoing power line 14 can include two, three, four or more first outgoing power lines. Accordingly, the at least one second outgoing power line 16 can include two, three, four or more second outgoing power lines.

Although not explicitly shown, it is to be understood, that outside of the power cabinet the at least one first outgoing power line 14 and the at least one second outgoing power line 16 are typically connected to a charging connector. The charging connector may also be referred to as charging gun. It is to be understood, that in a charging process the charging connector is connected with a socket of the electric vehicle and the power for charging the vehicle is provided from the power supply via the charging cable to the vehicle.

According to embodiments, which can be combined with other embodiments described herein, the third connector plate 123 is substantially parallel to the first connector plate 111. In particular, the third connector plate 123 is parallel to the first connector plate 111 within a tolerance T of T≤10°, particularly T≤5°, from perfect parallelism .

According to embodiments, which can be combined with other embodiments described herein, the fourth connector plate 124 is substantially parallel to the second connector plate 112. In particular, the fourth connector plate 124 is parallel to the second connector plate 112 within a tolerance T of T≤10°, particularly T≤5°, from perfect parallelism.

According to embodiments, which can be combined with other embodiments described herein, the first connector plate 111, the second connector plate 112, the third connector plate 123, and the fourth connector plate 124 are substantially vertically arranged. In particular, the first connector plate 111, the second connector plate 112, the third connector plate 123, and the fourth connector plate 124 are vertically arranged within a tolerance T of T≤10°, particularly T≤5°, from perfect verticality.

According to embodiments, which can be combined with other embodiments described herein, the first connector plate 111 and the second connector plate 112 are directly connected. In particular, the first connector plate 111 and the second connector plate 112 can be provided by an integral one-piece plate element. It is to be understood that the integral one-piece plate element can be bended such that the first connector plate 111 and the and the second connector plate 112 have an orientation according to embodiments describe herein.

According to embodiments, which can be combined with other embodiments described herein, the third connector plate 123 is connected with the fourth connector plate 124 via a connecting plate 125. Typically, the connecting plate 125 is substantially horizontally arranged. In particular, the connecting plate 125 can be horizontally arranged within a tolerance T of T≤10°, particularly T≤5°, from the perfect horizontal.

According to embodiments, which can be combined with other embodiments described herein, the third connector plate 123, the connecting plate 125, and the fourth connector plate 124 are provided by an integral one-piece plate element. It is to be understood that the integral one-piece plate element can be bended such that the third connector plate 123, the connecting plate 125, and the fourth connector plate 124 have an orientation according to embodiments describe herein.

With exemplary reference to Fig. 2, according to embodiments, which can be combined with other embodiments described herein, the connecting plate 125 at least partially extends over the second connector plate 112.

According to embodiments, which can be combined with other embodiments described herein, at least one of the first connector plate 111, the third connector plate 123 and the fourth connector plate 124 is fixed to a wall of the power cabinet via one or more insulating spacer elements 19.

According to embodiments, which can be combined with other embodiments described herein, the first connector plate 111 includes a pair of first connectors 17 for a pair of incoming first power lines 13. Typically, the first connectors 17 are arranged on opposite sides of the first connector plate 111. Additionally or alternatively, the third connector plate 123 includes a pair of second connectors 18 for a pair of incoming second power lines 15. Typically, the second connectors 18 are arranged on opposite sides of the third connector plate 123.

According to another aspect of the present disclosure, a charging station 20 for an electric vehicle is provided. The charging station includes a power cabinet 10 according any embodiments described herein. Further, the charging station 20 includes a charging cable 30 comprising the at least one first outgoing power line 14 and the at least one second outgoing power line 16. The at least one first outgoing power line 14 is connected to the second connector plate 112. The at least one second outgoing power line 16 is connected to the fourth connector plate 124.

With exemplary reference to Fig. 1, according to embodiments, which can be combined with other embodiments described herein, the charging cable 30 is provided into the power cabinet 10 at an inclination angle β of 30° ≤ β ≤ 100°with respect to a side wall of the power cabinet 10. For instance, the charging cable 30 can be provided into the power cabinet 10 substantially perpendicular to a side wall of the power cabinet 10. In particular, the charging cable 30 can be provided into the power cabinet 10 at an inclination angle β of β=90° ±5°. Alternatively, the charging cable 30 can be provided into the power cabinet 10 at an inclination angle β of 30° ≤ β ≤ 80°.

According to embodiments, which can be combined with other embodiments described herein, the at least one first outgoing power line 14 is connected to the second connector plate 112 in a substantially horizontal orientation. Further, typically the at least one second outgoing power line 16 is connected to the fourth connector plate 124 in a substantially horizontal orientation. A "substantially horizontal orientation" can be understood as an horizontal orientation within a tolerance T of T≤10°, particularly T≤5°, from the perfect horizontal.

According to embodiments, which can be combined with other embodiments described herein, the charging cable 30 comprises at least one cooling line 31, as schematically indicated in Fig. 2. A "cooling line" can be understood as a cooling conduit configured for conveying coolant for cooling the at least one first outgoing power line 14 and the at least one second outgoing power line 16 as described herein. Although not explicitly shown, it is to be understood that typically the cooling line 31 is connected to a coolant supply.

In view of the embodiments described herein, it is to be understood that compared to the state of the art an improved power cabinet for a charging station and an improved charging station for electric vehicles are provided. In particular, embodiments of the present disclosure beneficially provide for the possibility to connect the charging cable with the busbars such that a bending radius of the charging cable within the power cabinet is reduced as compared to the state of the art. A reduction of the bending radius of the charging cable is particularly beneficial for liquid cooled charging cables. Further, the configuration of the power cabinet according to embodiments described herein has the advantage that a compact arrangement of busbars for connecting incoming and outgoing powerlines is provided, such that the overall size of the power cabinet and thus the overall size of the charging station can be decreased.

Further, it is to be noted that embodiments of the present disclosure beneficially provide for the possibility that the incoming power lines can be provided from a bottom into the power cabinet and the outgoing power lines of a charging cable can exit the power cabinet through a side wall of the power cabinet. Moreover, embodiments of the present disclosure have the advantage that, compared to the state of the art, an easier frontal access for connecting the incoming and outgoing power lines to the busbars is provided, which can be beneficial during installation or maintenance.

While the foregoing is directed to embodiments, other and further embodiments may be devised without departing from the basic scope, and the scope is determined by the claims that follow.

### REFERENCE NUMBERS

- 10: power cabinet
- 10B: bottom of power cabinet
- 10S: side wall of power cabinet
- 11: first busbar
- 111: first connector plate
- 112: second connector plate
- 12: second busbar
- 123: third connector plate
- 124: fourth connector plate
- 125: connecting plate
- 13: at least one first incoming power line
- 14: at least one first outgoing power line
- 15: at least one second incoming power line
- 16: at least one second outgoing power line
- 17: first connectors
- 18: second connectors
- 19: insulating spacer elements
- 20: charging station
- 30: charging cable
- 31: cooling line

## Claims

1. A power cabinet (10) for a charging station (20), comprising:
a first busbar (11) having
a first connector plate (111) for connecting at least one first incoming power line (13), and
a second connector plate (112) for connecting at least one first outgoing power line (14), wherein the second connector plate (112) is inclined with respect to the first connector plate (111) by a first angle α₁ of 80° ≤ α₁ ≤ 110°; and
a second busbar (12) having
a third connector plate (123) for connecting at least one second incoming power line (15), the third connector plate (123) being arranged opposite the first connector plate (111), and
a fourth connector plate (124) for connecting at least one second outgoing power line (16), wherein the fourth connector plate (124) is inclined with respect to the third connector plate (123) by a second angle α₂ of 80° ≤ α₂ ≤ 100°, and wherein the fourth connector plate (124) is arranged opposite the second connector plate (112).

2. The power cabinet (10) of claim 1, wherein the at least one first incoming power line (13) and the at least one second incoming power line (15) are provided into the power cabinet (10) from a bottom (10B) of the power cabinet (10).

3. The power cabinet (10) of claim 1 or 2, wherein the at least one first outgoing power line (14) and the at least one second outgoing power line (16) exit the power cabinet (10) at a side wall (10S) of the power cabinet (10).

4. The power cabinet (10) of any of claims 1 to 3, wherein the third connector plate (123) is parallel to the first connector plate (111) within a tolerance T of T≤10°, particularly T≤5°, from perfect parallelism .

5. The power cabinet (10) of any of claims 1 to 4, wherein the fourth connector plate (124) is parallel to the second connector plate (112) within a tolerance T of T≤10°, particularly T≤5°, from perfect parallelism.

6. The power cabinet (10) of any of claims 1 to 5, wherein the first connector plate (111), the second connector plate (112), the third connector plate (123), and the fourth connector plate (124) are vertically arranged within a tolerance T of T≤10°, particularly T≤5°, from perfect verticality.

7. The power cabinet (10) of any of claims 1 to 6, wherein the first connector plate (111) and the second connector plate (112) are directly connected, particularly wherein the first connector plate (111) and the second connector plate (112) are provided by an integral one-piece plate element.

8. The power cabinet (10) of any of claims 1 to 7, wherein the third connector plate (123) is connected with the fourth connector plate (124) via a connecting plate (125), the connecting plate (125) being horizontally arranged within a tolerance T of T≤10°, particularly T≤5°, from the perfect horizontal.

9. The power cabinet (10) of claim 8, wherein the third connector plate (123), the connecting plate (125), and the fourth connector plate (124) are provided by an integral one-piece plate element.

10. The power cabinet (10) of claim 8 or 9, wherein the connecting plate (125) at least partially extends over the second connector plate (112).

11. The power cabinet (10) of any of claims 1 to 10, wherein at least one of the first connector plate (111), the third connector plate (123) and the fourth connector plate (124) is fixed to a wall of the power cabinet via one or more insulating spacer elements (19).

12. The power cabinet (10) of any of claims 1 to 11, wherein the first connector plate (111) comprises a pair of first connectors (17) for a pair of incoming first power lines (13), the first connectors (17) being arranged on opposite sides of the first connector plate (111), and/or wherein the third connector plate (123) comprises a pair of second connectors (18) for a pair of incoming second power lines (15), the second connectors (18) being arranged on opposite sides of the third connector plate (123).

13. A charging station (20) for an electric vehicle, comprising:
- a power cabinet (10) according to any of claims 1 to 12, and
- a charging cable (30) comprising the at least one first outgoing power line (14) connected to the second connector plate (112) and the at least one second outgoing power line (16) connected to the fourth connector plate (124).

14. The charging station (20) of claim 13, the charging cable (30) being provided into the power cabinet (10) at an inclination angle β of 30° ≤ β ≤ 100°with respect to a side wall of the power cabinet (10), wherein the at least one first outgoing power line (14) is connected to the second connector plate (112) in a substantially horizontal orientation, and wherein the at least one second outgoing power line (16) is connected to the fourth connector plate (124) in a substantially horizontal orientation.

15. The charging station (20) of claim 13 or 14, wherein the charging cable (30) comprises at least one cooling line (31).
